Europäisches Patentamt

European Patent Office

Office européen des brevets

(19)

(11) **EP 0 771 094 B1**

(12) **EUROPÄISCHE PATENTSCHRIFT**

(45) Veröffentlichungstag und Bekanntmachung des Hinweises auf die Patenterteilung:
**24.08.2005 Patentblatt 2005/34**

(51) Int Cl.⁷: **H04L 9/32**, B60R 25/00, E05B 49/00

(21) Anmeldenummer: **96250243.1**

(22) Anmeldetag: **24.10.1996**

(54) **Verfahren und Anordnung zur Herstellung und Erkennung der Authentizität von Befehlssignalen**

Method and apparatus for generating and recognizing authenticity of command signals

Procédé et dispositif de génération et de reconnaissance de l'authenticité de signaux de commande

(84) Benannte Vertragsstaaten:
**DE ES FR GB IT SE**

(30) Priorität: **26.10.1995 DE 19541116**

(43) Veröffentlichungstag der Anmeldung:
**02.05.1997 Patentblatt 1997/18**

(73) Patentinhaber: **4TECH Gesellschaft für Technologie- und Know-how-Transfer GmbH 14153 Teltow (DE)**

(72) Erfinder:
• **Wilhelmi, Wolfgang, Prof. Dr. 10117 Berlin (DE)**
• **Tarnick, Steffen Dr. 14129 Berlin (DE)**

(74) Vertreter: **Hengelhaupt, Jürgen et al Anwaltskanzlei Gulde Hengelhaupt Ziebig & Schneider Wallstrasse 58/59 10179 Berlin (DE)**

(56) Entgegenhaltungen:
EP-A- 0 171 323          EP-A- 0 385 070
WO-A-89/02507           DE-A- 4 328 781
DE-C- 4 240 458

## Beschreibung

Die Erfindung betrifft ein Verfahren und eine Anordnung zur Herstellung und Erkennung der Authentizität von Befehlssignalen durch eine diese Signale verarbeitende Empfangsschaltung, z.B. ein Stellglied. Diese Erkennung ist dort erforderlich, wo Sender und Empfangsschaltung räumlich getrennt sind und die Verarbeitung unautorisierter Befehlssignale, die z.B. durch einen anderen Sender, ein Falsifikat oder durch Manipulation erzeugt werden, zu erheblichen Schäden führen kann.

Gegenwärtig gewinnt diese Authentizitätskontrolle beispielsweise für die elektronische Diebstahlssicherung von Kraftfahrzeugen an Bedeutung. Sie ist jedoch ebenso erforderlich für den störungsfreien Betrieb jeglicher technischer Prozesse, die von einem Sender drahtgebunden oder drahtlos durch Steuersignale beeinflußt werden. Ziel ist in jedem Fall die absolute Sicherheit des Informationskanals zwischen Sender und Empfänger des Steuerungssignals sowie des Empfängereingangs vor unautorisierten Befehlssignalen.

Zur Bewältigung dieser Aufgabe sind bereits die unterschiedlichsten Lösungsvorschläge erarbeitet worden. So wird in DE 43 18 596 der einfachste Weg zur Gewährleistung eines manipulationssicheren Informationskanals in der konstruktiven Zusammenfassung von Sender und Empfänger in einem Gefäß gesehen, dessen Inneres praktisch unzugänglich ist. So soll ein Funkempfänger zum Empfang eines Sperrsignals in die Motorelektronik eines Kraftfahrzeugs integriert werden. Durch die somit nicht mögliche getrennte Anordnung der beiden Schaltungskomponenten ist eine für die Gesamtkonstruktion vorteilhafte Nachrüstbarkeit des Funkempfängers sowie dessen möglicherweise erwünschte Ortsveränderlichkeit gegenüber der Motorelektronik jedoch nicht gegeben. In DE 23 22 037 wird zur Diebstahlsicherung von elektrischen Geräten eine zwischen Verbraucher und Stromversorgung geschaltete codierte Steckverbindung vorgeschlagen. In weiteren bekannten Wegfahrsperren für Kraftfahrzeuge wird die Leitungsführung zwischen Schlüsseleinheit und Aktuatoren bewußt unübersichtlich gestaltet. In DE 43 39 234 erkennt eine in einer Kapsel befindliche Schaltung, Panzerung von Autobatterie und Anschlußpolen vorausgesetzt, eine Unterbrechung der Stromversorgung und verursacht einen Kurzschluß.

Aus der Datenverarbeitung ist es bekannt, die Berechtigung zur Arbeit an einem Datenendgerät durch Abfrage und Vergleich eines oder mehrerer Kennwörter zu prüfen. Im Datenverarbeitungssystem selbst sind diese Kennwörter verschlüsselt abgespeichert. Allerdings ist es mit einem gewissen Aufwand möglich, den Austausch dieser Kennwörter und Schlüssel zu beobachten. Die Authentizität von Informationen kann man mit asymmetrischen Schlüsselsystemen erreichen. Zur Führung von Authentizierungsdialogen benutzt man meist Kennwörter, die durch Pseudozufallszahlen erzeugt werden. In Datenverarbeitungsanlagen wird die Zugangsberechtigung nicht permanent überprüft. Diese permanente Überprüfung ist jedoch Zielstellung der vorliegenden Erfindung. In DE 43 28 781 wird eine Lösung beschrieben, bei der in der Informationsquelle eine Nachricht aus dem Ausgang eines Pseudozufallsgenerators hergestellt wird. In der sogenannten Informationssenke werden die entsprechenden Bitpositionen mit dem Ausgang eines mit dem ersten synchron betriebenen identischen Pseudozufallsgenerator verglichen. Die Sicherheit der Zugangsberechtigung wird hier dadurch erhöht, daß bei der Informationsquelle ein Zufallsbitgenerator vorgesehen ist, der in die Zeichenkette, die von der Informationsquelle zur Informationssenke übertragen wird, an wählbaren Stellen Zufallsbit einfügt. Diese Zufallsbit werden bei der Auswertung der Zeichenkette in der Informationssenke dann nicht beachtet. Ein hinreichender Schutz gegen unberechtigten Zugriff ist hier jedoch im Gegensatz zur vorliegenden Erfindung nur dann möglich, wenn die Schaltung der Zufallsgeneratoren und die Positionen der Biteinfügungen geheimgehalten werden.

Die Verwendung von Kennwörtern in anderen als Datenverarbeitungsanlagen wird in DE 42 40 458 derart beschrieben, daß sich in einem Zündschlüssel eines Kraftfahrzeuges ein Sender befindet, der periodisch einen Code aussendet. In Einzelgeräten oder betriebsrelevanten elektrischen Baugruppen befinden sich dann Code-Empfänger, die bei Nichtübereinstimmung Alarm auslösen bzw. abschalten. DE 43 21 417 behandelt den unerlaubten Austausch der Motorelektronik eines Kraftfahrzeuges, in der die Kenninformation gespeichert ist, im Zusammenhang mit dem Wiederauffinden des Fahrzeuges mittels Mobilfunk. Hierbei sollen Fahrzeug-Identifikator und der jüngste Zustand eines Transponders an einer weiteren Stelle im Fahrzeug gespeichert sein, so daß bei Einsatz eines neuen Transponders auf Übereinstimmung geprüft werden kann.

Demgegenüber ist es Aufgabe der vorliegenden Erfindung, zwei örtlich völlig getrennte Sende- und Empfangseinheiten drahtgebunden oder drahtlos unter Verwendung an sich bekannter Bau- und Schaltungselemente derart zu koppeln, daß die Empfangsschaltung immer nur autorisierte Signale der Sendeschaltung verarbeitet, während sie unautorisierte Signale jeglicher Art erkennt und darauf z.B. mit Sperre, Alarm, Verriegelung oder ähnlichem reagiert. Dabei soll es unerheblich sein, ob die unauthentischen Signale durch einen fremden Sender, ein Falsifikat des vorhandenen oder durch beliebige andere Manipulationen im Kanal zwischen den Einheiten oder am Eingang der Empfangsschaltung erzeugt worden sind. Auch die zeitweilige Auftrennung des Kanals sowie der Ausfall der internen Stromversorgung sollen erkannt und berücksichtigt werden. Die Authentizität der Kopplung beider Einheiten soll bei erstmaliger Inbetriebsetzung des gesamten Schaltungskomplexes selbständig mit geringem technischen Aufwand hergestellt werden können und die Schaltungen sollen für die Massenproduktion geeignet sein, ohne daß das Wirkprinzip, nach dem sich die Autorisierung der Sendeschaltung gegenüber der Empfangsschaltung automatisch vollzieht, im Detail offenbar wird.

Die beiden Schaltungseinheiten sollen mit möglichst wenigen Bauelementen preiswert realisierbar sein und eine unterbrechungsfreie interne Stromversorgung während langer, unbeaufsichtigter Betriebsintervalle gewährleisten.

Diese Aufgabe wird erfindungsgemäß gelöst, durch die Merkmale im kennzeichnenden Teil der Ansprüche 1 und 5 in Verbindung mit den Merkmalen im Oberbegriff. Zweckmäßige Ausgestaltungen der Erfindung sind in den Unteransprüchen enthalten.

Die Erfindung soll nachstehend anhand von teilweise in den Figuren 1 bis 4 dargestellten Ausführungsbeispielen näher erläutert werden.

Es zeigen:

Fig. 1    ein Blockschaltbild der Sendeschaltung A und der Empfangsschaltung B mit gemeinsamer Taktversorgung

Fig.2    die identischen Automaten AA, AB der Sendeschaltung A und der Empfangsschaltung B,

Fig.3    die Steuereinheit UB in Empfangsschaltung B, die mit Steuerschaltung UA in Sendeschaltung A identisch ist,

Fig.4    den Codierer KA in der Sendeschaltung A und Decodierer DB in der Empfangsschaltung B,

Fig.5    ein Signalflußplan der Automaten AA bzw. AB,

Fig.6    ein Diagramm des Signalverlaufes am Ausgang eines Automaten,

Fig.7    ein Diagramm des Signalverlaufes des Signals y.

Fig.8    ein Blockschaltbild der Sendeschaltung A und der Empfangsschaltung B mit Verzweigung des Signals x zum Automaten AA und des Signals z zum Automaten AB,

Fig.9    die identischen Automaten AA, AB der Sendeschaltung A und der Empfangsschaltung B mit Schaltungsteilen zur Verarbeitung des Signals x bzw. z

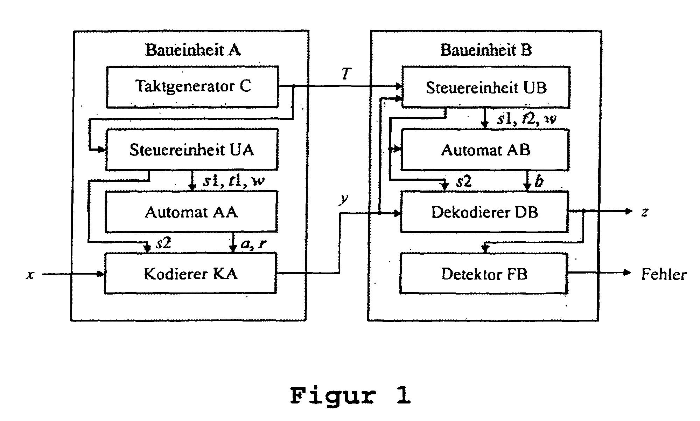

In dem in Fig. 1 dargestellten Blockschaltbild besteht die Sendeschaltung A aus der Steuereinheit UA, dem Automat AA und dem Codierer KA, deren Wirkungsweise nachfolgend beschrieben wird. Außerdem ist im Ausführungsbeispiel der Taktgenerator C in der Sendeschaltung A angeordnet, der auch an die Empfangsschaltung B gekoppelt ist.

Diese besteht aus dem Automaten AB, dem Decodierer DB und dem Detektor FB.

Taktgenerator C arbeitet über die Steuereinheit UB auf die Empfangsschaltung B. Damit sind die Automaten AA und AB gleich getaktet. Ein bestimmtes, in bekannter Weise erzeugtes Steuersignal x verarbeitet der Automat AA mittels des Codierers KA zu einem Übertragungssignal Y, das dem Decodierer DB in der Empfangsschaltung B zugeführt wird und dort mit dem Ausgang des Automaten AB das authentische Steuersignal z=x erzeugt. Ist jedoch Sendeschaltung A gestört, ohne Hilfsenergie gelassen, die Signalleitung unterbrochen, gegen ein Falsifikat oder eine Ersatzschaltung ausgetauscht worden, dann sperrt der Detektor FB die Befehlsübertragung, löst Alarm aus, schaltet die Anlage ab oder dergleichen. Die Automaten AA und AB sind im Normalbetrieb gleich oder ähnlich strukturiert, sie haben in jedem Taktintervall den selben Ausgang. Die erstmalige Kopplung von Sendeschaltung A mit Empfangsschaltung B erfolgt, indem Automat AA den Automaten AB "prägt", diesen gewissermaßen mit seinem "elektronischen Fingerabdruck" versieht. Zur Kopplung wird die interne Stromversorgung eingeschaltet. Der Automat AA wird in einen zufälligen Zustand versetzt, der sein Verhalten bestimmt. Die Periode des daraus resultierenden Signals muß möglichst groß sein. Koppelsignal a ist das einzige Signal, das, durch Taktgenerator C und Steuereinheiten UA und UB mit s1 synchronisiert, über Signalleitung y die prägende Kopie des Automaten AA nach Empfangsschaltung B überträgt und dort als Automat AB abspeichert.

Die Zustandsübergangs- und Ausgabefunktionen und die jeweils augenblicklichen Zustände der beiden Automaten AA und AB sind durch Unbefugte nicht oder nur mit unvertretbar hohem Aufwand erkennbar, weil die schaltungstechnisch realisierbare, sehr hohe Anzahl dieser Zustände innerhalb einer Periode der Automatenausgabe so groß ist, daß es praktisch unmöglich ist, die Automaten vollständig zu beobachten und nachzubilden.

Erst nach der Abspeicherung des Automaten AA als Automat AB sind Sendeschaltung A und Empfangsschaltung B für den normalen Betrieb zusammengeschaltet. Eine Veränderung des Automaten AB ist nun nicht mehr möglich, weil der Prägevorgang auch die Unterbindung eines nachträglichen schreibenden Zugriffs auf seinen jetzt mit dem Automaten AA identischen Zustand herbeiführt. Hierzu ist Automat AB beispielsweise mit an sich bekannten elektrisch permanent auftrennbaren oder schließbaren Transfergattern ausgerüstet.

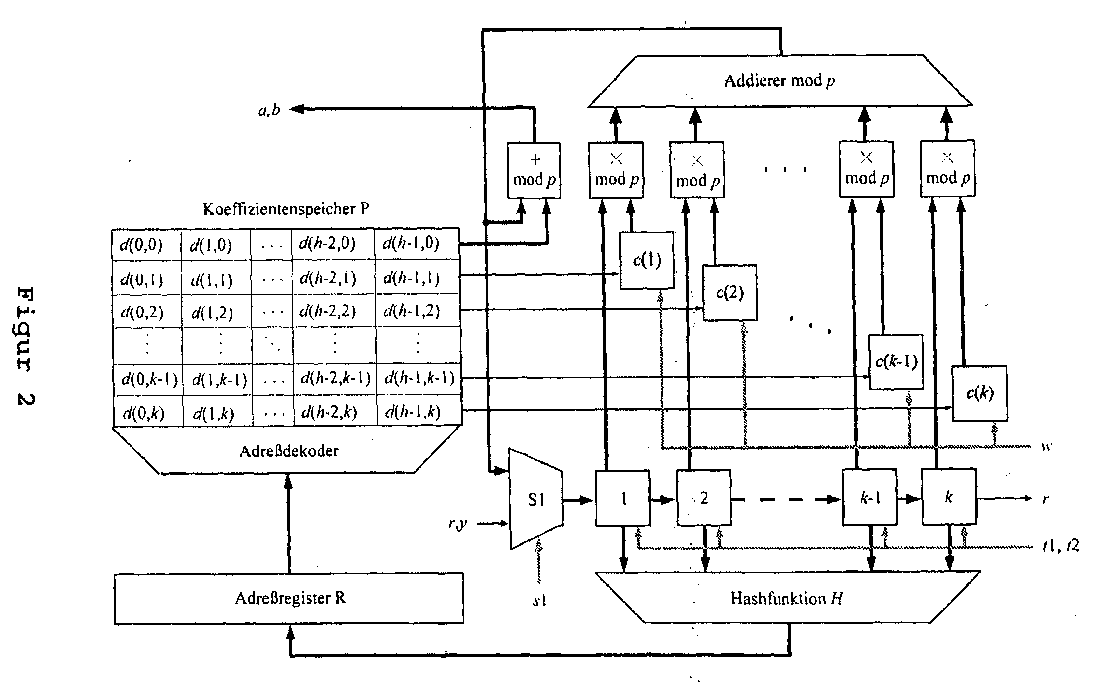

In Fig. 2 sind die Automaten AA und AB nur einmal näher erläutert, weil ihre Schaltungen identisch sind. In die Beschreibung der Automaten AA und AB sind deren mathematische Prämissen für die notwendigen extrem langen Perioden einbezogen. Der Signalfluß für den Normalbetrieb ist durch die dick gezeichneten Pfeile gekennzeichnet. Die Automaten AA und AB bestehen aus dem Selektor S1, dem Adreßregister R, dem Koeffizientenspeicher P sowie einem Rückkoppelnetzwerk, das nachfolgend beschrieben wird.

In einem aus den Registern R1...Rk zusammengeschaltenen Schieberegister wird beim Übergang von einer Periode des Schiebetaktsignals t zur folgenden Periode der am Eingang jedes Registers angelegte Signalwert übernommen, während am Ausgang jedes Registers das Signal solange anliegt, bis es vom folgenden Register übernommen wurde. Die in den Registern R1, ... Rk gespeicherten Werte werden jeweils mit dem Koeffizienten c (1), ..., c (k) multipliziert und saldiert (beides modulo p).

Der so gewonnene Wert wird mittels Selektor S1 in das Ende des Schieberegisters R1 eingespeist. Dieser Selektor S1 wird mit dem Signal s1 gesteuert. Unter der Voraussetzung, daß in mindestens einer Zelle des Schieberegisters R1, ..., Rk ein von Null verschiedener Wert vorhanden war, ändern diese Signale ihren Wert meist beim nächsten Takt, spätestens jedoch nach (k-1) Takten. Die Signalamplitude soll beispielsweise den Wertebereich 0, ⋯, p-1 haben. P ist eine Primzahl Eine Ausnahme ist hier nur das übliche binäre Signal mit p=2, hier entsprechen die modulare Multiplikation und Addition dem logischen Oder bzw. der logischen Antivalenz. Die Koeffizienten c (1), ... , c (k) können so gewählt werden, daß die Periode den maximalen Wert pk - 1 annimmt.

Es ist bekannt, daß es $\phi$ ($p^k$-1) / k derartiger Koeffizientenkonstellationen (Polynome) gibt. Dabei ist $\phi$ (x) die zahlentheoretische Eulersche Funktion, welche die Anzahl der ganzen Zahlen 1, ..., x-1 angibt, die zu x teilerfremd sind. Die folgende Tabelle stellt Periode und Polynomanzahl sowie den prozentualen Anteil derartiger Polynome an allen möglichen nichttrivialen Polynomen für den binären Fall (p = 2) und ausgewählte Werte der Kettenlänge k dar. Außerdem ist die Stellenzahl einer eventuellen Binäradressierung möglichst vieler verschiedener derartiger Polynome im Koeffizientenspeicher P tabelliert.

Tabelle 1

| k | $\ell=2^k$-1 | m=$\phi$ ($\ell$)/k | m/l %] | ⌊ $\log_2 m$ ⌋ |
|---|---|---|---|---|
| 17 | 131071 | 7710 | 5,88 | 12 |
| 19 | 524287 | 27594 | 5,26 | 14 |
| 23 | 8388607 | 356960 | 4,26 | 18 |
| 25 | 33554431 | 1296000 | 3,86 | 20 |
| 29 | 536870911 | 18407808 | 3,43 | 24 |
| 31 | 2147483647 | 69273666 | 3,23 | 26 |
| 35 | 34359738367 | 929275200 | 2,70 | 29 |
| 37 | 137438953471 | 3697909056 | 2,69 | 31 |
| 41 | 2199023255551 | 53630700752 | 2,44 | 35 |
| 43 | 8796093022207 | 204064589160 | 2,32 | 37 |
| 47 | 140737488355327 | 2992477516800 | 2,13 | 41 |
| 49 | 562949953421311 | 11389311767808 | 2,02 | 43 |
| 53 | 9007199254740991 | 169917983040000 | 1,89 | 47 |
| 55 | 36028797018963967 | 598690870272000 | 1,66 | 49 |

Für die möglichst umfassende Geheimhaltung des prägenden" Signals ist nicht nur die Periodendauer maßgebend, sondern auch die zur Beobachtung und Berechnung der Koeffizienten c (1), ..., c (k) erforderliche Zeit. Nur wenn man beides kennt, ist die zeitsynchrone Imitation des Automaten AA durch ein Falsifikat denkbar. Die Entdeckungszeit ist dann unzulässig kurz, wenn aus der Beobachtung des Ausgangs direkt auf den Inhalt des Schieberegisters R1...Rk geschlossen werden kann. Um dies zu vermeiden, werden die Ausgänge a bzw. b aus dem Rückführsignal durch systematische Überlagerung "verfälscht". Dabei wird ein aus der aktuellen Belegung des Schieberegisters R1...Rk abgeleiteter Wert zu dem rückgekoppelten Wert addiert, was dann das endgültige Ausgangssignal a bzw. b ergibt.

Hierzu wird der als p-äre Zahl interpretierte Inhalt des Schieberegisters

$$\sum_{i=0}^{k-1} r(i+1)p^i$$

mit r(i) als dem Inhalt des Registers Ri durch eine Hashfunktion auf eine ganze Zahl aus dem Bereich 0, ..., h-1 abgebildet. Diese Zahl wird als Adresse im Koeffizientenspeicher P verwendet. Zur stabilen Anwahl dient das Adressregister R. Ein Teil des mit h ausgewählten Speicherwortes, nämlich d(h,0), wird zur Superposition herangezogen. Der übrige Inhalt des Koeffizientenspeichers P wird nur dann verwendet, wenn das Schreibkommando gesetzt wird und damit die Übernahme der Koeffizienten c(i)=d(h, i) bei ausgewähltem i=0, ....h-1. in die Koeffizientenregister veranlaßt wird. Es ist auch möglich, die Spalte mit dem Index 0 durch eine beliebige andere Spalte des Koeffizientenspeichers P zu ersetzen.

Die gewählte Hashfunktion H (.) ist für die Erfindung nicht wesentlich. Alle bekannten Verfahren können verwendet werden, der Parameter h kann weitgehend beliebig festgelegt werden. Insbesondere ist im binären Fall eine Lösung zu empfehlen, bei der h als Zweierpotenz $2^j$ festgelegt wird und die erforderlichen Bit aus ausgewählten und permutierten Anzapfungen des Schieberegisters gewonnen werden. Damit machen auch bei identischer Belegung der Koeffizientenspeicher auf der Sender- und Empfängerseite die unterschiedlichen Hashfunktionen eine erfolgreiche Kopplung beider unmöglich.

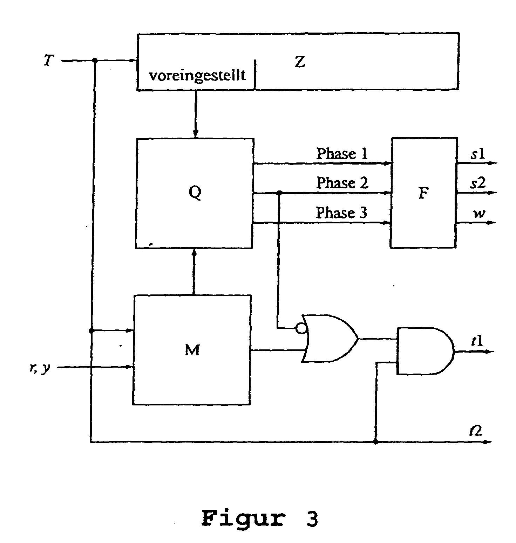

Die im Blockschaltbild gemäß Fig. 1 dargestellten Steuereinheiten UA und UB sind identisch aufgebaut. Das erfindungsgemäß "prägende" Koppelsignal zur funktionell untrennbaren Verbindung von Sendeschaltung A und Empfangsschaltung B wird in diesen Steuereinheiten gebildet. In Fig. 3 ist beispielsweise eine Steuereinheit UB dargestellt. Der Prägevorgang wird durch einen Rückwärtszähler Z gesteuert, dessen höherwertiger Teil auf einem ausreichend hohen Wert voreingestellt worden ist. Der niederwertige Teil ergibt sich zufällig beim Anlegen der internen Stromversorgung. Ein Komparatorblock Q vergleicht den Zählerausgang mit fest vorgegebenen Werten, die den Übergang von Phase 1 zu Phase 2 bzw. den frühesten Übergang von Phase 2 zu Phase 3 kennzeichnen. Der Nulldurchgang des Zählers beendet die Phase 3 und startet den Normalbetrieb der Gesamtschaltung. Im Allgemeinen starten die beiden Zähler der Steuereinheiten UA und UB nicht synchron. Unter der Voraussetzung, daß der Zähler in Steuereinheit UA ausreichend lange vor dem Zähler in Steuereinheit UB gestartet wurde, spricht eine an sich bekannte, zur Synchronisation dienende Erkennungsschaltung M an, wenn in mindestens k+1 aufeinanderfolgenden Takten identische Werte eintreffen. Jetzt gibt ein einfaches Folgesteuerwerk F binäre Steuersignale ab. Beide Steuereinheiten übertragen gleichzeitig den Takt t derart, daß das Taktsignal t1 in der Phase 2 gesperrt und das Taktsignal t2 direkt aus T abgeleitet wird.

Der mit den Steuereinheiten UA und UB ausgelöste Prägevorgang erfolgt in drei Phasen.

Phase 1 beginnt mit dem Schließen der Rückkopplung durch den Selektor S1 mittels des Signals s1 und dem sofort oder kurz darauf folgenden Wechseln des Schreibsignals w, wodurch aus dem Koeffizientenspeicher P ein Koeffizientensatz ausgewählt und in die Koeffizientenregister geladen wird. Gleichzeitig wird das Steuersignal s2 derart gestellt, daß am Ausgang der Sendeschaltung A und der Empfangsschaltung B das aus dem Schieberegister austretende Signal r bzw. die unschädliche Konstante u beobachtet werden können. Die Belegung des Signals s2 wird erst geändert, wenn die Phase 3 abgeschlossen wird und der Normalbetrieb beginnt. Die beiden Automaten AA und AB arbeiten nunmehr autonom mit zufällig gewählten Anfangsbedingungen und Koeffizienten. Nach Ablauf einer zufälligen Zeitspanne wird Phase 2 in der Baueinheit A erreicht. Die den nicht rückgekoppelten Eingang des Selektors S1 in der Empfangsschaltung B und der Sendeschaltung A beobachtende Erkennungsschaltung M kann nicht ansprechen, weil Signale aus linearen rückgekoppelten Schieberegistern, die zur Erkennung erforderlichen Eigenschaften nicht haben. In Phase 2 wird der Takt t1 derart angehalten, daß das Schieberegister im Automaten AA "eingefroren" wird. Durch abermaliges Setzen des Schreibsignals w wird mittels der Hashfunktion der zum zufälligen Inhalt des Schieberegisters gehörende Koeffizientensatz aus dem Koeffizientenspeicher P geladen. Der Automat AB wird weiter durch t2 getaktet und befindet sich vorläufig weiter in Phase 1. Genau k Takte nach dem Übergang von Automat AA in Phase 2 versetzt die Erkennungsschaltung M den Automaten AB direkt in die Phase 3. Gleichzeitig passiert das auch im Automaten AA.

In Phase 3 wird der Selektor S1 umgeschaltet. Dadurch wird das aus dem Schieberegister des Automaten AA in der Sendeschaltung A austretende Signal r sowohl dort als auch in der Empfangsschaltung B in den Eintrittspunkt beider Schieberegister eingespeist. Jetzt wird das Taktsignal t1 wieder aktiv. Nach Ablauf von mindestens k Takten befinden sich in beiden Schieberegistern identische Belegungen. Jetzt wird durch Aktivierung des Schreibsignals w ein aktueller und für beide Automaten AA und AB ein identischer Koeffizientensatz geladen und mittels Signal s1 die Rückkopplung geschlossen. Über die Selektoren S2 des Codierers KA bzw. Decodierers DB werden jetzt die codierten und decodierten Signale y bzw. z weitergeleitet.

Die beschriebenen 3 Phasen des "Prägens" dürfen nur ein einziges Mal ablaufen, sie dürfen sich nicht wiederholen lassen. Nur so wird der Zweck der Erfindung erreicht. Hierzu werden in weiterer Ausgestaltung der Erfindung folgende Maßnahmen vorgeschlagen, die einzeln oder kombiniert angewendet werden können.

1. Die interne Stromversorgung insbesondere der Empfangsschaltung B muß gegen unberechtigtes Aus- und Einschalten gesichert sein, sie könnte sonst beliebig initialisiert werden.

2. Nach erfolgter "Prägung" ist die Voreinstellung des Zählers Z für immer zu löschen, Versuche, die Einstellvorgänge zu wiederholen, wären dann zeitlich nicht mehr zu bewältigen.

3. Der nicht rückgekoppelte Eingang im Selektor S1 wird für immer aufgetrennt.

4. Ein erneutes Schreiben der Koeffizientenregister wird unmöglich gemacht.

Die Maßnahmen 2. bis 4. lassen sich günstigerweise realisieren, indem nach Ablauf der "Prägung" die entsprechenden Signalleitungen auf den Schaltkreisen durchgebrannt werden (fuse blowing). Die entsprechenden Verfahren sind bekannt.

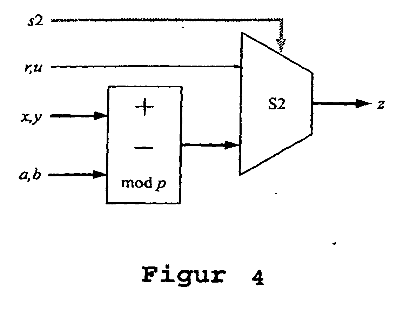

In Fig. 4 sind Codierer KA und Decodierer DB in einem Blockschaltbild dargestellt. Auch hier gelten die fett gezeichneten Datenflußpfade für den Normalbetrieb. Der Codierer KA realisiert die Operation y=(x+a) modulo p mittels eines Addierers ohne Überlauf. Der Decodierer DB versucht die eindeutige Rekonstruktion des Signals z = x durch Subtraktion z =(y-b) modulo p mittels eines Subtrahierers ohne Unterlauf, der apparativ ebenfalls durch einen Addierer implementiert werden kann. Die Rekonstruktion des Signals ist dann korrekt, wenn das Signal b eine Kopie des Signals a ist. Besonders einfach ist der binäre Fall, bei dem beide Funktionen durch die logische Antivalenz verwirklicht werden. Weiterhin sind beide Schaltungen mit einem Selektor S2 ausgestattet, der zur Durchschaltung des Schieberegisterausganges bzw. der Konstanten u vorgesehen ist, die während der erstmaligen Kopplung (Prägung) auf den Ausgang z durchgeschaltet wird und einen Signalwert aufweisen muß, der einen gefahrlosen Zustand der Empfangsschaltung B herstellt. Der Selektor S2 wird durch das Signal s2 gestellt.

Der in Fig. 1 dargestellte Detektor FB in Empfangsschaltung B besteht aus einem Komparator, der das vom Decodierer DB gelieferte Signal z permanent mit einem reservierten Wert f vergleicht. Dieser Wert taucht entweder im zu übertragenden Signal x gar nicht auf oder hat die Bedeutung, daß im binären Fall eine nicht autorisierte Signalübertragung erkannt und die entsprechende Funktion, z.B. Sperren, ausgelöst wird. Selbst wenn das zu übertragende Signal den Wert f nicht enthält, wird bei Nichtübereinstimmung der Signale a und b (d.h. bei nichtautorisierter Kopplung) das Signal z irgendwann den Wert f annehmen und vom Komparator erkannt werden. Die Wahrscheinlichkeit dafür wächst mit der Länge der Beobachtungszeit; die im Mittel erforderliche Anzahl der Takte ist linear von kp abhängig. Die weitere Auswertung des Fehlersignals und des Ausgabesignals z ist nicht Gegenstand der Erfindung. Es ist beispielsweise möglich, ein angeschlossenes Fehlerregister nur dann zu setzen, wenn das Fehlersignal länger als ein bestimmtes Zeitintervall anliegt oder das Taktsignal mit auszuwerten, um eventuelle relative Verschiebungen der Flanken der Signale a und b auszugleichen.

Neben der im Ausführungsbeispiel gemäß Fig. 1 dargestellten Möglichkeit, das Taktsignal in der Sendeschaltung A auch für die Empfangsschaltung B mit zu erzeugen, besteht natürlich die Möglichkeit, dieses auch in umgekehrter Richtung zu tun. Eine zentrale ungeschützte Taktversorgung hat jedoch den Nachteil, daß durch widerrechtliches Verlängern oder Verkürzen der Taktperiode die Zeit bis zur Fehlererkennung ausgedehnt bzw. die notwendige Beobachtungszeit für eine unberechtigte Imitation verkürzt werden kann.

Das folgende Beispiel hat ein Schieberegister aus 8 Zellen (k=8), als Modul des verwendeten Zahlensystems wird die Primzahl 3 verwendet (p=3). Damit ergibt sich eine maximale Periode von $p^k$ -1= 6560. Der Wertevorrat der Signale umfaßt die Werte 0,1,2. Der bei einer binären Implementierung der Schaltung ebenfalls mögliche Signalwert 3 könnte für eine zusätzliche Sicherung, z. B. die schnelle Erkennung eines Leitungsbruches, genutzt werden. Bei der Annahme einer Taktperiode von 100 ms bedeutet dies, daß zur Entschlüsselung die Registrierung eines Zeitabschnittes von fast 11 min bei sonst konstanten Verhältnissen erforderlich ist. Durch Verlängerung des Schieberegisters um jeweils eine Stufe verdreifacht sich die erforderliche Beobachtungszeit und der Speicherplatzbedarf. So würden sich für ein 14 stufiges Schieberegister bei sonst gleichen Verhältnissen mehr als 40 Stunden ergeben.

Die für das Beispiel ausgewählte Belegung des Koeffizientenspeichers P ist in der folgenden Tabelle 2 dargestellt:

Tabelle 2

| d(i,j) | 0 | 1 | 2 | 3 | 4 | 5 | 6 | 7 | 8 |
|---|---|---|---|---|---|---|---|---|---|
| 0 | 0 | 0 | 0 | 0 | 0 | 2 | 0 | 0 | 1 |

Tabelle 2 (fortgesetzt)

| d(i,j) | 0 | 1 | 2 | 3 | 4 | 5 | 6 | 7 | 8 |
|---|---|---|---|---|---|---|---|---|---|
| 1 | 0 | 0 | 2 | 0 | 0 | 0 | 1 | 1 | 1 |
| 2 | 2 | 0 | 1 | 0 | 1 | 0 | 1 | 1 | 1 |
| 3 | 0 | 2 | 0 | 2 | 0 | 2 | 2 | 0 | 1 |
| 4 | 0 | 2 | 2 | 2 | 1 | 2 | 2 | 0 | 1 |
| 5 | 0 | 2 | 1 | 2 | 1 | 0 | 2 | 2 | 1 |
| 6 | 1 | 1 | 0 | 1 | 0 | 1 | 2 | 0 | 1 |
| 7 | 0 | 1 | 2 | 1 | 1 | 2 | 1 | 2 | 1 |
| 8 | 0 | 1 | 1 | 1 | 1 | 1 | 1 | 2 | 1 |

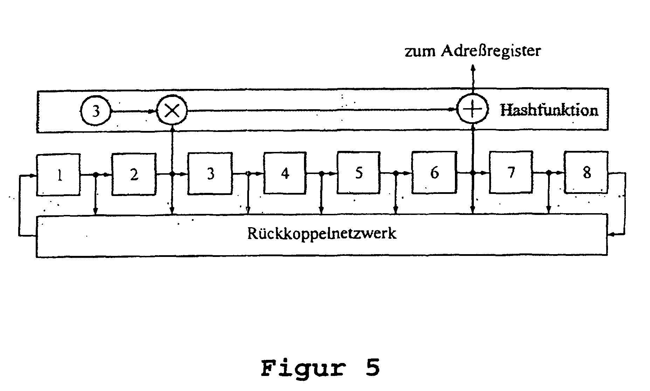

Die Tabelle enthält neun Eintragungen mit den Indizes 0, 1,...8. Es wird also erwartet, daß die Hashfunktion diesen Wertebereich nicht überschreitet und möglichst lückenlos ausfüllt. Eine entsprechende spezielle Lösung ist in der folgenden Figur 5 dargestellt. Das Schieberegister wird an zwei Ausgängen (an den Zellen 2 und 6) angezapft und dieses Paar als zweistellige Ternärzahl interpretiert, wobei der höherwertige Teil der Zelle 2 zugeordnet ist. Dazu wird der Wert aus Zelle 2 mit der Zahl 3 multipliziert und mit dem Wert aus Zelle 6 addiert. Diese Operationen sind in üblicher Arithmetik, d. h. nicht modulo p, durchzuführen.

Beim Durchlauf einer Periode maximaler Länge tritt jedes mögliche geordnete Paar von Werten an den Zellen 2 und 6 mit gleicher Häufigkeit auf. Dies bedeutet, daß die von der Hashfunktion berechneten Adreßwerte gleichverteilt sind. In der ersten Spalte von Tabelle 2 mit dem Index 0 befinden sich die Eintragungen, die den aus dem rückgekoppelten Schieberegister austretenden Bistrom modifizieren sollen. Die dort mit Null belegten Positionen bedeuten, daß für entsprechende Adreßwerte die Signale a bzw. b mit dem Ausgang r der letzten Stufe übereinstimmen. Dies trifft nach Vorgesagtem auf 7/9 (ca. 77%) aller Taktintervalle zu. Die folgenden Spalten 1,...,8 enthalten die Rückkopplungskoeffizienten, die neun verschiedenen aus insgesamt 320 ($\phi(3^8-1)/k=2560/8=320$) möglichen Polynomen für maximale Periodendauer entsprechen. Der Nachweis für die gewünschte Eigenschaft der Polynome soll aus Platzgründen nicht geführt werden. Jeweils eine Zeile ist einem Polynom zugeordnet. Eine weitere Ausgestaltung der Lösung könnte darin bestehen, daß zur Modifikation der Signale anstelle der Spalte 0 eine andere Spalte herangezogen wird.

Es soll nun ein beispielhafter Signalverlauf während des Betriebes der Sendeschaltung A betrachtet werden. Nach Aktivierung der Sendeschaltung A durch Zuschalten der internen Stromversorgung beginnt der Rückwärtszähler Z der Steuereinheit UA unter Wirkung des Taktes zu arbeiten. Am Eingang des zunächst noch offenen Schieberegisters liegt ein von Null verschiedener Wert aus dem zulässigen Wertebereich an, der hier zu 1 angenommen wird. Die Rückkopplung ist nicht geschlossen, so daß die anliegende 1 sich immer weiter zu höheren Zellen des Schieberegisters ausbreitet. Wir nehmen für das Beispiel an, daß mindestens 8 Takte vergehen, ehe die Phase 1 beginnt. Diese Annahme dient lediglich der vereinfachten Demonstration. Es ist ausreichend, wenn mindestens eine Zelle des Schieberegisters einen von Null verschiedenen Wert annimmt. Danach ist die übersichtliche Situation erreicht, daß jede der Zellen des Schieberegisters mit 1 geladen ist. Der Wert der Hashfunktion ist dann 3x1+1=4. Damit wird das Polynom ausgewählt, welches dem 5. Eintrag (Index 4) in Tabelle 2 entspricht und die Werte in die Koeffizientenregister eingetragen. Außerdem wird die Rückkopplung geschlossen. Nach Ablauf einer hier willkürlich mit 50 angenommenen Zahl von Takten (bei 100 ms Taktperiode nach 5 s) gerechnet von der Übernahme des Polynoms wird die Phase 2 erreicht. Die Belegung des Schieberegisters zu diesem Zeitpunkt ist in Tabelle 3 dargestellt. Die aufwendige rekursive Berechnung dieses Zustandes soll hier nicht nachvollzogen werden.

Tabelle 3

| Stufe | 1 | 2 | 3 | 4 | 5 | 6 | 7 | 8 |
|---|---|---|---|---|---|---|---|---|
| Inhalt | 1 | 1 | 0 | 2 | 2 | 1 | 0 | 0 |

Der erreichte Zustand wird nun im Automaten AA eingefroren und anschließend in der Phase 3 auf den Automaten AB übertragen. Dafür werden beispielsweise 9=8+1>k Takte angesetzt, wodurch sich durch zyklische Verschiebung aus Tabelle 3 die identische Belegung der Schieberegister in den Schaltungen A und B nach Tabelle 4 ergibt.

Tabelle 4

| Stufe | 1 | 2 | 3 | 4 | 5 | 6 | 7 | 8 |
|---|---|---|---|---|---|---|---|---|

Tabelle 4   (fortgesetzt)

| Inhalt | 0 | 1 | 1 | 0 | 2 | 2 | 1 | 0 |
|--------|---|---|---|---|---|---|---|---|

Nunmehr wird in beiden Automaten AA und AB mittels der Hashfunktion, die jetzt nach Tabelle 4 den Wert $3 \times 1 + 2 = 5$ annimmt, das Polynom mit dem Index 5, d.h. das in der 5. Zeile von Tabelle 2 gespeicherte, geladen. Die Phase 3 wird abgeschlossen durch Wiederinbetriebsetzen des Rückführnetzwerkes und die Inbetriebsetzung des Codierers KA bzw. des Dekodierers KB.

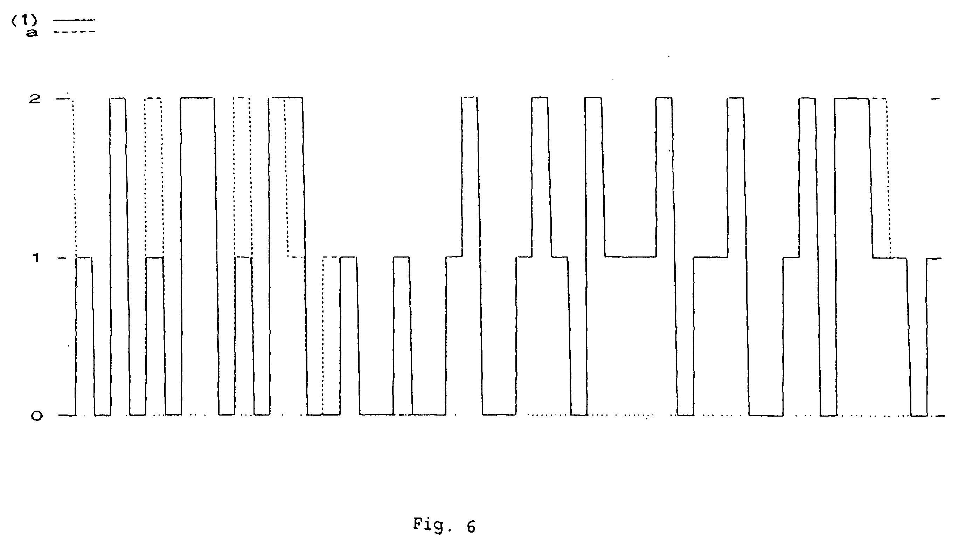

Das in Fig. 6 dargestellte Diagramm betrifft den Signalverlauf am Ausgang des Rückführkoppelnetzwerkes (1) sowie nach der Modifikation durch Werte, die der Spalte 0 des Speichers entnommen wurden a. Die Aufzeichnung beginnt nach Ablauf der Phase 3 und umfaßt 50 Taktperioden. Man erkennt sowohl den regellosen Charakter des Grundsignals (1) als auch der Modifikation, die seine Beobachtung und Auswertung zu einer praktisch unlösbaren Aufgabe machen.

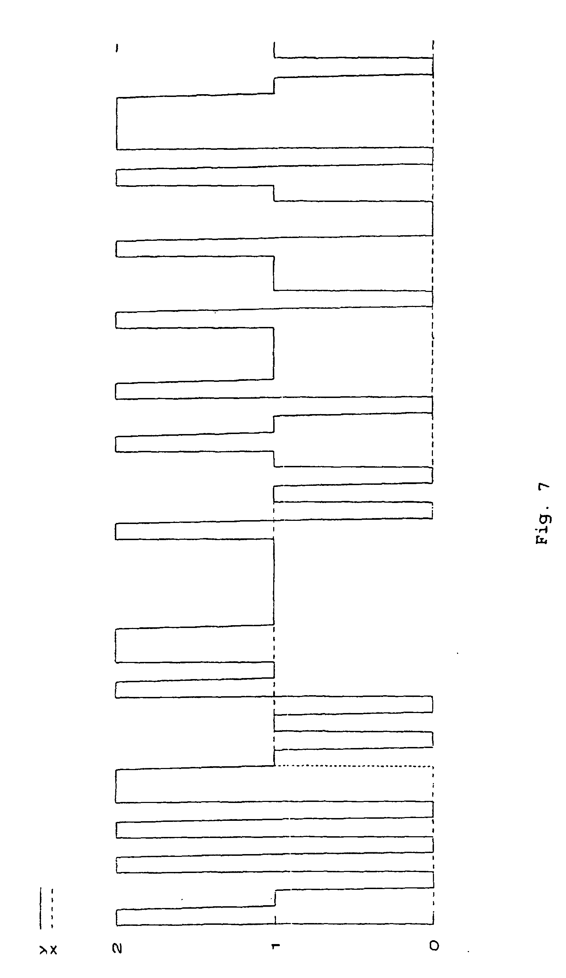

Das weitere in Fig. 7 dargestellte Diagramm zeigt für denselben Zeitabschnitt das am Ausgang des Codierers KA sichtbare Signal y, wenn ein Steuerimpuls x der Amplitude I im Zeitintervall von Takt 10 bis 25 wirkt. Man erkennt, daß es nicht nur große Schwierigkeiten bereitet, ein gewünschtes Signal durch Nachbildung vorzutäuschen, sondern auch, ohne Kenntnis des Signals a aus dem Signal y den Eingang x zu rekonstruieren.

In einer weiteren Ausgestaltung der Erfindung wird vorgeschlagen, daß die Taktsignale in den beiden beteiligten Schaltungen, Sendeschaltung A und Empfangsschaltung B, getrennt erzeugt werden und während der Phase 1 der "Prägung" eine Erstsynchronisation mittels des Signals r erfolgt. Die weitere Erhaltungssynchronisation kann dann aus dem Signal y abgeleitet werden. Das kann mit einem an sich bekannten Phasenregelkreis geschehen. Die vorliegende Erfindung läßt den Einsatz beliebiger Synchronisationsverfahren zu, bei denen Signal r niemals und Signal y sehr selten Folgen von mehr als $(k-1)$ identischen Werten enthält.

Die Kenntnis der Belegung des Koeffizientenspeichers P im Automaten AA (Fig. 1 und 2) kann einen unerwünschten Angriff auf den zu schützenden Befehlskanal erleichtern, obwohl auch dafür ein beträchtlicher Beobachtungs- und Rechenaufwand zu leisten wäre. Deshalb sollte der Inhalt des Koeffizientenspeichers P nicht öffentlich zugänglich gemacht werden. Deshalb sollten für die unterschiedlichen Anwendungen, auch unterschiedliche Gerätegenerationen und verschiedene Hersteller unterschiedliche Belegungen des Koeffizientenspeichers P vorgenommen werden (Authentizierungsfamilien). Da eine fehlerfreie Befehlsgabe nur bei identischer Belegung auf Sender - und Empfängerseite zustande kommt, kann man so eine weitere Quelle für unbefugte oder fehlerhafte Kopplungen verschließen. Derselbe Effekt kommt zustande, wenn sich die Konfigurationen der Hashfunktion in verschiedenen Authentizierungsfamilien unterscheiden.

Es kann erforderlich sein, eine Befehlsgabe nicht nur von Sendeschaltung A zur Empfangsschaltung B, sondern auch in umgekehrter Richtung zu schützen. Eine naheliegende Lösung ist es, ein Duplikat der vorgeschlagenen Vorrichtung mit entgegengesetzter Wirkrichtung hinzuzufügen, allerdings ohne Vervielfachung der Takterzeugung. Durch Betreiben eines mehrphasigen Taktes kann die Koppelleitung in beiden Richtungen genutzt werden.

Die Empfangsschaltung B ist konstruktiv so zu gestalten und mit dem zu steuernden Aggregat (z.B. Motor, Maschine, Steuerung und dgl.) zu koppeln, daß der Versuch, in deren Schaltung einzudringen, mit hohem zeitlichen und technischen Aufwand und der möglichen Beschädigung oder Zerstörung des Aggregates verbunden ist. Das ist erforderlich, um auch die Injizierung eines falschen Signals z in das Aggregat unter Umgehung der Erfindung zu verhindern. Es darf nicht möglich sein, die in Empfangsschaltung B verborgene Automatentabelle und den Automatenzustand direkt einzulesen oder den Ausgang des Automaten AB ausreichend lange zu beobachten. Es kann zwar aus den Reaktionen des angeschlossenen Aggregates auf den Ausgang des Decodierers DB geschlossen werden, weil jedoch der Ausgang b des Automaten AB nicht vorausgesagt werden kann, ist die korrekte Erzeugung eines von einem nichtberechtigten Nutzer gewünschten Signals y höchst unwahrscheinlich, es sei denn, er hätte ausreichende Kenntnis über den Automaten AA. Deshalb muß auch die Sendeschaltung A so gebaut sein, daß sie nur sehr schwer zugänglich ist und zwecks Ausschluß von unbefugten Manipulationen der Steuergröße x muß sie mit einem entsprechenden Sensor (z.B. Notschalter, Kartenleser, Bruchmelder, Funkempfangskanal) untrennbar gekoppelt sein.

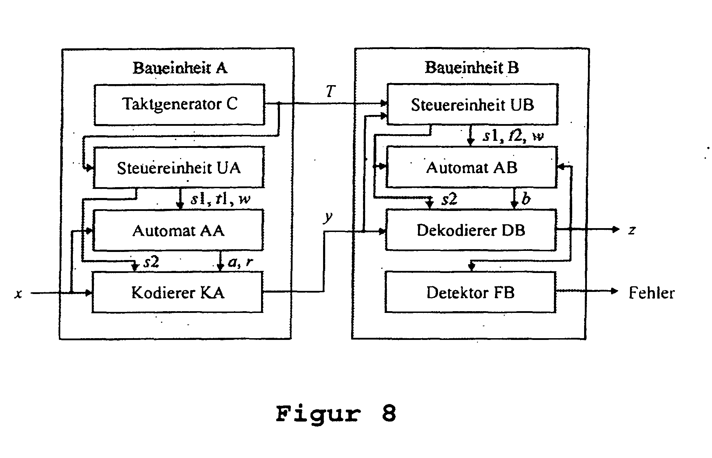

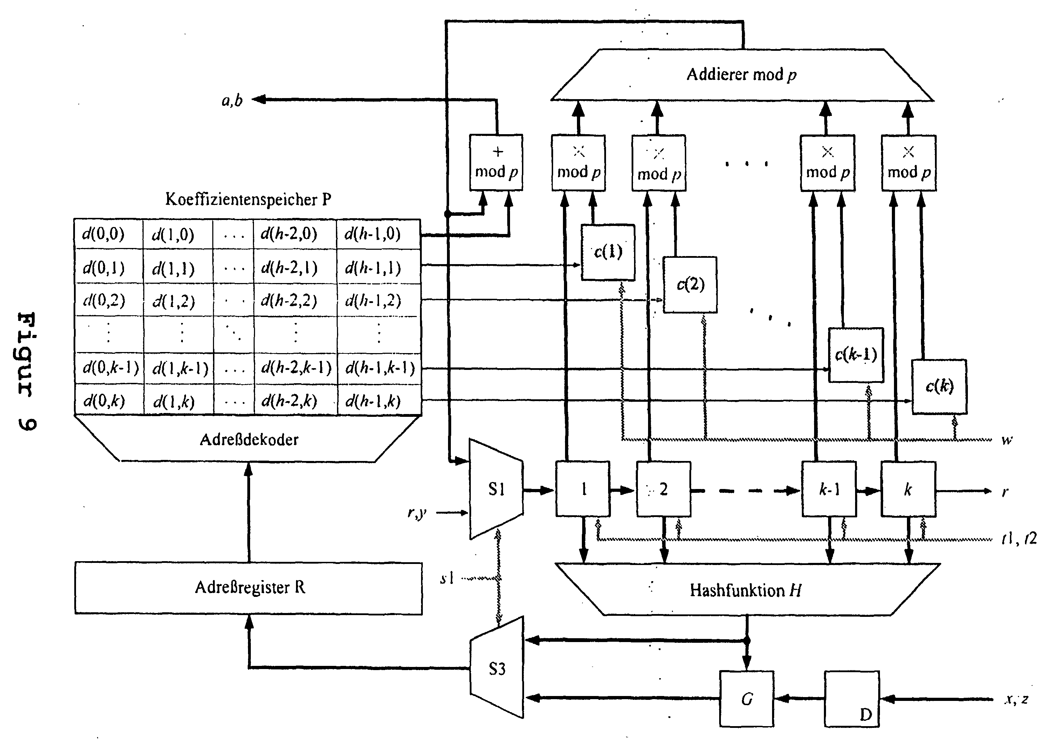

Eine Modifizierung der Erfindung soll nachstehend mit Hilfe der Figuren 8 und 9 erläutert werden. In dem in Figur 8 dargestellten Blockschaltbild wird gegenüber der Darstellung in Figur 1 in Einheit A das Steuersignal x auch zum Automaten AA und in Einheit B das Signal z auch zum Automaten AB geführt. Der in Figur 9 dargestellte Automat AA (der zum Automaten AB identisch ist) ist gegenüber der Darstellung in Figur 2 um den Selektor S3, die Schaltung G und ein D-Flip-Flop zur Verarbeitung des Signals x bzw. z erweitert.

In dieser erweiterten Ausführung der Einheiten A und B vollzieht sich die Prägung in der gleichen Weise wie in der vorher beschriebenen Ausführung. Die Belegung des Signals s1 während der Phasen 1 bis 3 sorgt dafür, daß der Selektor S3 den Ausgang der die Hashfunktion H realisierenden Schaltung mit dem Eingang des Adreßregisters R verbindet. Nach der Beendigung von Phase 3 ist s1 so gesetzt, daß zum Eingang des Adreßregisters R der Ausgang der Schaltung G geleitet wird. Die Schaltung G realisiert eine geeignet gewählte Funktion, g die den Ausgabewert der Hashfunktion H und das durch das D-Flip-Flop um einen Takt verzögerte Signal x bzw. z auf eine ganze Zahl aus dem Bereich 0,...,h-1 abbildet. Im Gegensatz zur vorher beschriebenen Ausführung der Einheiten A und B wird das Schreibsignal w nach Beendigung von Phase 3 in jedem Takt gesetzt.

Die Erfindung ist nicht auf die hier beschriebenen Ausführungsbeispiele beschränkt. Vielmehr ist es möglich, durch Kombination der genannten Mittel und Merkmale weitere Ausführungsvarianten zu realisieren, ohne den Rahmen der Erfindung zu verlassen.

**Patentansprüche**

1. Verfahren zur Herstellung und Erkennung der Authentizität von Befehlssignalen, die, in einem Sender erzeugt, drahtgebunden oder drahtlos zu einer diese Signale verarbeitenden Empfangsschaltung, übertragen werden, **dadurch gekennzeichnet,**
**dass** bei erstmaliger Inbetriebnahme einer Sendeschaltung (A) diese mit einer gleichzeitig oder verzögert eingeschalteten Empfangsschaltung (B) gekoppelt wird, wobei eine Steuereinheit (UA) der Sendeschaltung (A) aus einem in einem Automaten (AA) der Sendeschaltung (A) gespeicherten, erst nach Ablauf einer Beobachtungs- und Auswertzeit reproduzierbaren Signal ein Koppelsignal **a** erzeugt, dessen Charakteristik mittels einer gleichgetakteten Steuereinheit (UB) der Empfangsschaltung (B) dort in einem Automaten (AB) einmalig, nicht löschbar und nicht wiederholbar gespeichert wird und die Sendeschaltung (A) und Empfangsschaltung (B) funktionell untrennbar zusammenschließt.

2. Verfahren nach Anspruch 1,
**dadurch gekennzeichnet,**
**dass** zur pseudozufälligen Modifikation das Koppelsignal **a** durch eine Addition des aus dem aktuellen Zustand des Automaten (AA) der Sendeschaltung (A) abgeleiteten Wertes mit dem rückgekoppelten Wert aus einem jeweiligen Rückführungssignal gebildet wird.

3. Verfahren nach Anspruch 1,
**dadurch gekennzeichnet,**
**dass** ein "prägendes" Koppelsignal **a** in drei Phasen erzeugt und verarbeitet wird, derart,
**dass** in Phase 1 ein aus einem Koeffizientenspeicher (P) ausgewählter Koeffizientensatz in Koeffizientenregister geladen und gleichzeitig die Belegung eines Steuersignals **s** bis zur Beendigung von Phase 3 unverändert bleibt,
**daß** in Phase 2 der Takt **t1** angehalten, **dadurch** der in Phase 1 erreichte Zustand des Automaten (AA) der Sendeschaltung (A) "eingefroren" wird, während sich Automat (AB) in der Empfangsschaltung (B) noch in Phase 1 befindet, bis er mindestens k Takte nach Übergang des Automaten (AA) der Sendeschaltung (A) in Phase 2 von einer Erkennungsschaltung (M) der Steuereinheit (UB) der Empfangsschaltung (B) gleichzeitig mit Automat (AA) der Sendeschaltung (A) in Phase 3 versetzt wird,
**dass** in Phase 3 durch Umschaltung eines Selektors (S1) ein Signal r aus einer Schiebezelle (Rk) des Automaten (AA) der Sendeschaltung (A) sowohl in diese als auch die des Automaten (AB) der Empfangsschaltung (B) einspeist, so dass aufgrund des wieder im Automat (AA) der Sendeschaltung (A) anliegenden Taktsignals **t1** nach Ablauf von mindestens k Takten die Zustände der beiden Automaten (AA) und (AB) identisch sind, wobei wiederum ein aus dem Koeffizientenspeicher (P) ausgewählter Koeffizientensatz in die Automaten (AA) und (AB) geladen wird.

4. Verfahren nach Anspruch 3,
**dadurch gekennzeichnet,**
**dass** das "prägende" Koppelsignal **a** nur ein einziges Mal erzeugt und übertragen wird.

5. Anordnung mit einer Sendeschaltung und einer Empfangsschaltung zur Herstellung und Erkennung der Authentizität von Befehlssignalen, welche in der Sendeschaltung erzeugt und drahtgebunden oder drahtlos zu der diese Signale verarbeitenden Empfangsschaltung übertragen werden, wobei die Sendeschaltung und die Empfängerschaltung identisch ausgebildete, mit einem Taktsignal beaufschlagte Steuereinheiten, Automaten, einen Detektor, Kodierer und Dekodierer aufweisen, wobei der Detektor zur Erkennung nicht authentischer Befehlssignale und/oder Unterbrechung des Übertragungskanals und/oder der internen Stromversorgung dient und die Senderschaltung (A) und die Empfangsschaltung (B) bei erstmaliger Inbetriebnahme mittels eines Koppelsignals a koppelbar ausgebildet sind,
**dadurch gekennzeichnet,**
**dass** die Steuereinheit (UA) der Sendeschaltung (A) so ausgelegt ist, dass sie aus einem in dem Automaten (AA) der Sendeschaltung (A) gespeicherten, erst nach Ablauf einer Beobachtungs- und Auswertzeit reproduzierbaren Signal ein Koppelsignal **a** erzeugt, dass die gleichgetaktete Steuereinheit (UB) der Empfangsschaltung (B) so ausgelegt ist, dass sie in dem Automaten (AB) der Empfangsschaltung (B) die Charakteristik des Koppelsignals **a** einmalig, nicht löschbar und nicht wiederholbar speichert und die Sendeschaltung (A) und Empfangsschaltung (B) funktionell untrennbar zusammenschließt, dass der Kodierer (KA) der Sendeschaltung (A) derart ausgelegt ist, dass er aus einem Eingangssignal **x** und dem Koppelsignal a am Ausgang des Automaten (AA) der Sendeschaltung (A) ein Ausgangssignal **y=x+a** erzeugt und dass der Dekodierer (DB) der Empfangsschaltung (B) so ausgelegt ist, dass er aus dem Signal **y** und einem zum Koppelsignal **a** identischen Signal **b** am Ausgang des Automaten (AB) der Empfangsschaltung (B) ein Endsignal **z=y-a** erzeugt.

6. Anordnung nach Anspruch 5,
   **gekennzeichnet durch**,
   Mittel, die das Eingangssignal x zum Automaten (AA) der Sendeschaltung (A) und das Endsignal **z** zum Automaten (AB) zur Empfangsschaltung (B) führen.

7. Anordnung nach Anspruch 5,
   **dadurch gekennzeichnet,**
   **dass** für die Sendeschaltung (A) und die Empfangsschaltung (B) ein gemeinsamer Taktgenerator (C) angeordnet ist.

8. Anordnung nach Anspruch 7,
   **dadurch gekennzeichnet,**
   **dass** der Taktgenerator (C) in der Sendeschaltung (A) angeordnet ist.

9. Anordnung nach Anspruch 5,
   **dadurch gekennzeichnet,**
   **dass** sowohl die Sendeschaltung (A) als auch die Empfangsschaltung (B) jeweils mit Taktgeneratoren ausgerüstet sind, die durch das übertragene Signal **y** phasenrichtig synchronisiert sind.

10. Anordnung nach Anspruch 5,
    **dadurch gekennzeichnet,**
    **dass** die Empfangsschaltung (B) ein Stellglied ist.

## Claims

1. A method for establishing and recognizing the authenticity of command signals which are generated in a transmitter and transmitted, either by wire or wirelessly, to a reception circuit which processes these signals,
   **characterized in that**
   upon initial operation of a transmission circuit (A) the latter is coupled to a reception circuit (B), which is switched on either at the same time or with a delay, a control unit (UA) of the transmission circuit (A) generating a coupling signal **a** from a signal which is stored in an automaton (AA) of the transmission circuit (A) and can be reproduced only after a period of observation and evaluation, an identically clocked control unit (UB) of the reception circuit (B) storing the characteristics of said coupling signal there in an automaton (AB), once only and without the possibility of erasure or repetition, effecting a functionally inseparable integration of the transmission circuit (A) and the reception circuit (B).

2. The method according to claim 1,
   **characterized in that**
   to effect a pseudo-random modification the coupling signal **a** is formed by an addition of the value derived from the current state of the automaton (AA) of the transmission circuit (A) with the feedback value from an appropriate feedback signal.

3. The method according to claim 1,
   **characterized in that**
   an "imprinting" coupling signal **a** is generated and processed in three phases, such that in Phase 1 a set of coefficients selected from a coefficient storage (P) is loaded into coefficient registers and at the same time the assignment of a control signal **s** remains unchanged until Phase 3 is completed,

that in Phase 2 the clock **t1** is stopped, thus "freezing" the state reached by the automaton (AA) of the transmission circuit (A) in Phase 1, while automaton (AB) in the reception circuit (B) remains in Phase 1 until at least k clock cycles after the transition of the automaton (AA) of the transmission circuit (A) to Phase 2 it is caused by a recognition circuit (M) of the control unit (UB) of the reception circuit (B) to enter Phase 3 at the same time as automaton (AA) of the transmission circuit (A),

that in Phase 3 by switching a selector (S1) a signal **r** from a shift register (Rk) of the automaton (AA) of the transmission circuit (A) is fed both into this shift register and into that of the automaton (AB) of the reception circuit (B), so that due to the resumption of the clock signal **t1** in the automaton (AA) of the transmission circuit (A) the states of the two automata (AA) and (AB) are identical after at least k clock cycles have elapsed, a set of coefficients selected from the coefficient storage (P) being again loaded into the automata (AA) and (AB).

4. The method according to claim 3,
**characterized in that**
the "imprinting" coupling signal **a** is generated and transmitted only once.

5. A configuration with a transmission circuit and a reception circuit for establishing and recognizing the authenticity of command signals which are generated in the transmission circuit and are transmitted, either by wire or wirelessly, to the reception circuit which processes these signals, the transmission circuit and the reception circuit having identically designed control units supplied with a clock signal, automata, a detector, encoder and decoder, the detector serving to recognize inauthentic command signals and/or disruption of the transmission channel and/or of the internal power supply, and the transmission circuit (A) and the reception circuit (B) being designed to be coupled by means of a coupling signal **a** upon initial operation,
**characterized in that**
the control unit (UA) of the transmission circuit (A) is designed such that from a signal which is stored in the automaton (AA) of the transmission circuit (A) and can be reproduced only after a period of observation and evaluation it generates a coupling signal **a**, that the identically clocked control unit (UB) of the reception circuit (B) is designed such that it stores the characteristics of the coupling signal **a** in the automaton (AB) of the reception circuit (B), once only and without the possibility of erasure or repetition, effecting a functionally inseparable integration of the transmission circuit (A) and the reception circuit (B), that the encoder (KA) of the transmission circuit (A) is designed such that from an input signal **x** and the coupling signal **a** it generates at the output of the automaton (AA) of the transmission circuit (A) an output signal **y = x + a,** and that the decoder (DB) of the reception circuit (B) is designed such that from the signal **y** and a signal **b** identical to the coupling signal **a** it generates at the output of the automaton (AB) of the reception circuit (B) a final signal **z = y - a.**

6. A configuration according to claim 5,
**characterized by** means
which carry the input signal **x** to the automaton (AA) of the transmission circuit (A) and the final signal **z** to the automaton (AB) of the reception circuit (B).

7. A configuration according to claim 5,
**characterized in that**
the transmission circuit (A) and the reception circuit (B) are provided with a common clock generator (C).

8. A configuration according to claim 7,
**characterized in that**
the clock generator (C) is located in the transmission circuit (A).

9. A configuration according to claim 5,
**characterized in that**
both the transmission circuit (A) and the reception circuit (B) are provided with clock generators, which are synchronized in phase via the transmitted signal **y**.

10. A configuration according to claim 5,
**characterized in that**
the reception circuit (B) is an actuator.

**Revendications**

1.  Procédé pour la production et la reconnaissance d'authenticité de signaux d'instructions, lesquels sont générés dans un émetteur et transmis par connexion filaire ou sans fil à un circuit récepteur de traitement de ces signaux, **caractérisé en ce que** lors de la première mise en service d'un circuit émetteur (A), celui-ci est couplé à un circuit récepteur (B) à activation simultanée ou temporisée, une unité de commande (UA) du circuit émetteur (A) ne générant qu'à l'issue d'un temps d'observation et d'évaluation, à partir d'un signal reproductible mémorisé dans un automate (AA) du circuit émetteur (A), un signal de couplage **a** dont la caractéristique est mémorisée une seule fois, non effaçable et non répétable, dans un automate (AB) au moyen d'une unité de commande (UB) synchronisée du circuit récepteur (B), et regroupe fonctionnellement de manière inséparable le circuit émetteur (A) et le circuit récepteur (B).

2.  Procédé selon la revendication 1, **caractérisé en ce que** pour la modification pseudo-aléatoire, le signal de couplage **a** est formé par une addition de la valeur dérivée de l'état actuel de l'automate (AA) du circuit émetteur (A) et de la valeur rétro-couplée d'un signal de retour correspondant.

3.  Procédé selon la revendication 1, **caractérisé en ce qu'** un signal de couplage « prégnant » **a** est généré et traité en trois phases, de manière qu'en phase 1, une séquence de coefficients sélectionnée dans une mémoire de coefficients (P) soit chargée en registre de coefficients et simultanément l'affectation d'un signal de commande **s** reste inchangée jusqu'à l'issue de la phase 3, que le cycle **t1** soit arrêté en phase 2, qu'en conséquence l'état atteint en phase 1 par l'automate (AA) du circuit émetteur (A) soit « gelé », tandis que l'automate (AB) dans le circuit récepteur (B) se trouve encore en phase 1, jusqu'à ce qu'il soit décalé d'au moins k cycles après le passage de l'automate (AA) du circuit émetteur (A) en phase 2 depuis un circuit de détection (M) de l'unité de commande (UB) du circuit récepteur (B) simultanément avec l'automate (AA) du circuit émetteur (A) en phase 3, qu'en phase 3, par commutation d'un sélecteur (S1) un signal **r** d'une cellule déphaseuse (Rk) de l'automate (AA) du circuit émetteur (A) alimente tant celui-ci que celui de l'automate (AB) du circuit récepteur (B), si bien que suite au signal d'horloge **t1** à nouveau appliqué dans l'automate (AA) du circuit émetteur (A) à l'issue d'au moins k cycles, les états des deux automates (AA) et (AB) soient identiques, une séquence de coefficients sélectionnée dans la mémoire de coefficients (P) étant à nouveau chargée dans les automates (AA) et (AB).

4.  Procédé selon la revendication 3, **caractérisé en ce que** le signal de couplage « prégnant » **a** n'est généré et transmis qu'une seule fois.

5.  Agencement avec un circuit émetteur et un circuit récepteur pour la production et la reconnaissance d'authenticité de signaux d'instructions, lesquels sont générés dans le circuit émetteur et transmis par connexion filaire ou sans fil au circuit récepteur de traitement de ces signaux, où le circuit émetteur et le circuit récepteur présentent des unités de commande formées de manière identique, sur lesquelles un signal d'horloge est appliqué, des automates, un détecteur, un codeur et un décodeur, le détecteur étant prévu pour la reconnaissance de signaux d'instructions non authentiques et/ou l'interruption du canal de transmission et/ou l'alimentation interne en courant, et le circuit émetteur (A) et le circuit récepteur (B) étant formés pour être couplés à la première mise en service au moyen d'un signal de couplage **a,** **caractérisé en ce que** l'unité de commande (UA) du circuit émetteur (A) est conçue de manière à ne générer qu'à l'issue d'un temps d'observation et d'évaluation, à partir d'un signal reproductible mémorisé dans l'automate (AA) du circuit émetteur (A), un signal de couplage **a,** que l'unité de commande (UB) synchronisée du circuit récepteur (B) est conçue de manière à ce que dans l'automate (AB) du circuit récepteur (B), la caractéristique du signal de couplage **a** soit mémorisée une seule fois, non effaçable et non répétable, et regroupe fonctionnellement de manière inséparable le circuit émetteur (A) et le circuit récepteur (B), que le codeur (kA) du circuit émetteur (A) est conçu de manière à générer, à partir d'un signal d'entrée **x** et du signal de couplage **a** à la sortie de l'automate (AA) du circuit émetteur (A), un signal de sortie **y = x + a,** et que le décodeur (DB) du circuit récepteur (B) est conçu de manière à générer, à partir du signal **y** et d'un signal **b** identique au signal de couplage **a** à la sortie de l'automate (AB) du circuit récepteur (B), un signal terminal **z = y - a.**

6. Agencement selon la revendication 5,
**caractérisé par** des moyens conduisant le signal d'entrée **x** vers l'automate (AA) du circuit émetteur (A) et le signal terminal **z** vers l'automate (AB) du circuit récepteur (B).

7. Agencement selon la revendication 5,
**caractérisé en ce qu'**
est disposé un générateur d'horloge (C) commun au circuit émetteur (A) et au circuit récepteur (B).

8. Agencement selon la revendication 7,
**caractérisé en ce que** le générateur d'horloge (C) est disposé dans le circuit émetteur (A).

9. Agencement selon la revendication 5,
**caractérisé en ce que**
le circuit émetteur (A) ainsi que le circuit récepteur (B) sont équipés chacun de générateurs d'horloge, synchronisés en conformité avec la phase par le signal **y** transmis.

10. Agencement selon la revendication 5,
**caractérisé en ce que**
le circuit récepteur (B) est un composant de réglage.

**Figur 1**

Figur 2

**Figur 3**

Figur 4

Figur 5

Fig. 6

EP 0 771 094 B1

Fig. 7

**Figur 8**

Figur 9